# FASCICULE DE BREVET EUROPEEN

(11) **EP 4 508 411 B1**
(45) Date de publication et mention de la délivrance du brevet: **18.03.2026**
(21) Numéro de dépôt: 23722437.3
(22) Date de dépôt: 13.04.2023
(51) Int. Cl.: G01N 15/05, G01N 21/27

(54) **DISPOSITIF ET MÉTHODE DE DÉTERMINATION DE VITESSE DE SÉDIMENTATION**
VORRICHTUNG UND VERFAHREN ZUR BESTIMMUNG DER SEDIMENTATIONSRATE
DEVICE AND METHOD FOR DETERMINING SEDIMENTATION RATE

(30) Priorité: 15.04.2022 FR 2203574
(43) Date de publication de la demande: 19.02.2025
(73) Titulaire: Horiba ABX SAS, 34790 Grabels (FR)
(72) Inventeur: PIEDCOQ, Philippe, 34184 MONTPELLIER Cedex (FR); COUDERC, Guilhem, 34184 MONTPELLIER Cedex (FR); FUDALY, Christophe, 34184 MONTPELLIER Cedex (FR)
(74) Mandataire: Plasseraud IP
(86) Numéro de dépôt international: PCT/FR2023/050537
(87) Numéro de publication internationale: WO 2023/199002

(56) Documents cités:
- EP-A1- 2 921 862
- WO-A1-2021/097610
- IT-A1- UA20 163 693

## Description

L'invention concerne le domaine de l'hématologie, et plus particulièrement la détermination de la vitesse de sédimentation (ci-après VS, également appelée "erythrocyte sedimentation rate" ou "ESR" en anglais).

La vitesse de sédimentation fait partie des examens de routine avec la numération formule sanguine (ci-après NFS ou CBC pour "Complete Blood Count" en anglais) effectuée au cours d'un bilan sanguin et permet de détecter la présence de pathologies inflammatoires ou infectieuses. Par exemple un rhumatisme, un cancer et d'autres affections entraînant des changements de la concentration en protéines dans le sang. Une VS élevée indique un état inflammatoire sans préjuger de sa nature. Il arrive cependant que la VS reste basse alors qu'il y a un syndrome inflammatoire. Une VS élevée indique donc généralement la présence d'une pathologie. L'association de ce test non spécifique avec des examens complémentaires permet d'avoir un diagnostic plus précis.

La méthode de référence de la mesure de la VS est la méthode Westergren. Un tube étroit de dimensions normalisées est rempli d'un échantillon de sang prélevé avec un anticoagulant, par exemple de l'EDTA, et dilué au citrate de sodium et placé verticalement. La mesure de VS est la hauteur, en millimètres, de la colonne de plasma après une heure de sédimentation. Par exemple, il est considéré qu'une hauteur inférieure à 10 mm après la première heure de sédimentation est une valeur normale pour un adulte masculin. La limite de normalité n'est pas une valeur absolue mais dépend de l'âge et du sexe du patient.

La VS est la résultante de trois étapes : agrégation des hématies ou globules rouges, sédimentation, et tassement des rouleaux.

Le phénomène d'agrégation des hématies est produit en particulier par les protéines du sang avec une force d'autant plus grande que les concentrations de ces dernières sont élevées. La formation des agrégats est l'empilement des hématies en "rouleaux", puis en structures tridimensionnelles. La vitesse de sédimentation dépend des dimensions des agrégats et de la viscosité du plasma.

Pendant les dernières étapes, les agrégats vont sédimenter, c'est-à-dire qu'ils vont progressivement tomber au fond du tube, puis se compacter, ce qui va avoir pour effet de séparer le prélèvement en une portion translucide claire (plasma), en haut, et une portion beaucoup plus foncée (hématies) en bas. La VS est mesurée par la hauteur de la portion translucide.

Le paramètre inflammatoire le plus pertinent est le phénomène d'agrégation qui est directement dépendant des concentrations des protéines plasmatiques. C'est ce phénomène qui est mesuré par la présente invention pour retourner une valeur de VS. C'est également un paramètre non spécifique, mais qui supprime des interférences résultantes des deux dernières étapes de la VS. Il n'y a pas de paramètre normalisé permettant d'exprimer cette vitesse ou dynamique/cinétique d'agrégation. Il est donc pertinent de transposer des grandeurs de mesure d'agrégation en VS.

De par la quantité de sang (1,6 ml) et la durée nécessaire à sa réalisation (1 heure), la méthode Westergren n'est pas compatible avec les automates d'hématologie pour l'analyse CBC. Pour contourner ces problèmes, des recherches ont été menées afin d'utiliser des mesures optiques d'extinction (absorption et diffusion) pour déterminer la vitesse de sédimentation, comme dans le brevet US 6 632 679.

Certains brevets, comme décrit dans EP 2 921 862 ont proposé d'intégrer une mesure de VS modifiée dans un appareil de test sanguin qui prélève une quantité de sang et la sépare en deux portions qui font respectivement l'objet d'un comptage (NFS) et d'une mesure de vitesse de sédimentation.

Cet appareil lie donc la mesure de comptage et celle de mesure de vitesse de sédimentation, ce qui est désavantageux car nécessite un appareillage complexe pour distribuer via un unique prélèvement, deux portions d'échantillons de sang vers la section de comptage d'un côté et vers la section de mesure de vitesse de sédimentation d'un autre, d'autant plus que les opérations CBC et de mesure de VS ne présentent pas les mêmes besoins en termes de préparation de l'échantillon.

Certains brevets, comme celui décrit dans WO 2011/101815, ont proposé des appareils portables permettant de mettre en œuvre une mesure de la vitesse de sédimentation par mesure de la transmittance. Ce dispositif utilise des capillaires à usage unique mais nécessite un système d'aspiration du sang pour la mesure. De plus, leur méthode d'introduction du capillaire rend l'appareil peu ergonomique. En outre, la mesure de transmittance pose des problèmes d'exactitude du fait de l'utilisation des capillaires.

Le document ITUA20163693A1 décrit un appareil permettant d'effectuer des analyses hématologiques sur des échantillons de sang et permettant d'intégrer la détection de la vitesse de sédimentation du sang (VS) à la détection d'autres paramètres chimiques et physiques du sang.

Le document FR 2 955 392 décrit un dispositif de mesure de vitesse d'agrégation comprenant un support d'embout amovible, des moyens d'aspiration reliés audit support, des moyens de capture en regard dudit support d'au moins une grandeur physique représentative de l'agrégation de composant sanguins et des moyens de détermination de la vitesse d'agrégation en fonction d'au moins une dite grandeur physique.

Aucun dispositif connu ne permet de réaliser une détermination de vitesse de sédimentation de manière rapide, répétible et avec une architecture simple.

L'invention vient améliorer la situation. À cet effet, elle propose un dispositif de détermination de vitesse de sédimentation comprenant au moins un organe de prélèvement d'un échantillon sanguin, et un capteur comprenant une source de lumière à infrarouge et un capteur optique disposés sensiblement en regard l'un de l'autre autour d'une portion sensiblement transparente de l'organe de prélèvement de sorte que la lumière émise par la source de lumière infrarouge atteint le capteur optique après avoir traversé ladite portion sensiblement transparente, le capteur optique étant agencé pour réaliser une mesure de blanc, le dispositif comprenant en outre un convertisseur agencé pour recevoir une ou plusieurs mesures de transmission lumineuse du capteur optique, pour calculer le rapport entre la mesure de blanc et la ou les plusieurs mesures de transmission lumineuse et pour retourner une vitesse de sédimentation.

Ce dispositif est particulièrement avantageux car il permet de déterminer la mesure de vitesse de sédimentation de manière répétible.

Selon divers modes de réalisation, l'invention peut présenter une ou plusieurs des caractéristiques suivantes :
- le convertisseur est agencé pour déterminer un instant de mesure de transmission lumineuse la plus basse, et un instant de mesure de transmission lumineuse final,
- le capteur optique est agencé pour mettre en œuvre un gain maximal entre l'instant de mesure de transmission lumineuse la plus basse et l'instant de mesure de transmission lumineuse final, et pour mettre en œuvre un gain minimal le reste du temps,
- le convertisseur est agencé pour calculer la vitesse de sédimentation à partir du ratio entre d'une part le rapport entre la mesure de blanc et la mesure à l'instant de mesure de transmission final, et d'autre part le rapport entre la mesure de blanc et la mesure à l'instant de mesure de transmission lumineuse de transmission lumineuse la plus basse,
- le capteur optique est commandé avec un gain faible avant que du sang passe dans la portion sensiblement transparente, et avec un gain fort après,
- l'organe de prélèvement est une aiguille pouvant être commandée pour le prélèvement d'un échantillon sanguin à laquelle est relié un tube dans lequel est réalisée la portion sensiblement transparente,
- la source de lumière à infrarouge et le capteur optique sont disposés à une distance de l'extrémité de prélèvement de l'aiguille inférieure à 10cm,
- le dispositif est agencé pour réaliser un rinçage de l'aiguille et du tube entre deux déterminations de mesures de vitesse de sédimentation,
- l'organe de prélèvement est un capillaire, et dans lequel le capteur présente un alésage agencé pour recevoir ledit capillaire et
- le capillaire présente un ergot agencé pour venir en butée contre le capteur.

L'invention concerne également un procédé de détermination de vitesse de sédimentation comprenant les opérations suivantes :
a) prélever un échantillon sanguin,
b) faire passer l'échantillon sanguin dans une portion sensiblement transparente disposée entre une source de lumière à infrarouge et un capteur optique,
c) mesurer une ou plusieurs transmissions lumineuses lors de l'opération b)
d) réaliser une mesure de blanc en l'absence d'échantillon sanguin, et
e) calculer le rapport entre la mesure de blanc et la ou les plusieurs mesures de transmission lumineuse et en tirer une vitesse de sédimentation.

L'opération d) peut être réalisée avant l'opération c).

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente une vue schématique générale d'un dispositif selon l'invention,
- la figure 2 représente un détail de réalisation d'un élément de la figure 1,
- la figure 3 représente un diagramme de mesure par le dispositif de la figure 1,
- la figure 4 représente une vue schématique d'un premier mode de réalisation du dispositif de la figure 1, et
- la figure 5 représente une vue schématique d'un deuxième mode de réalisation du dispositif de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

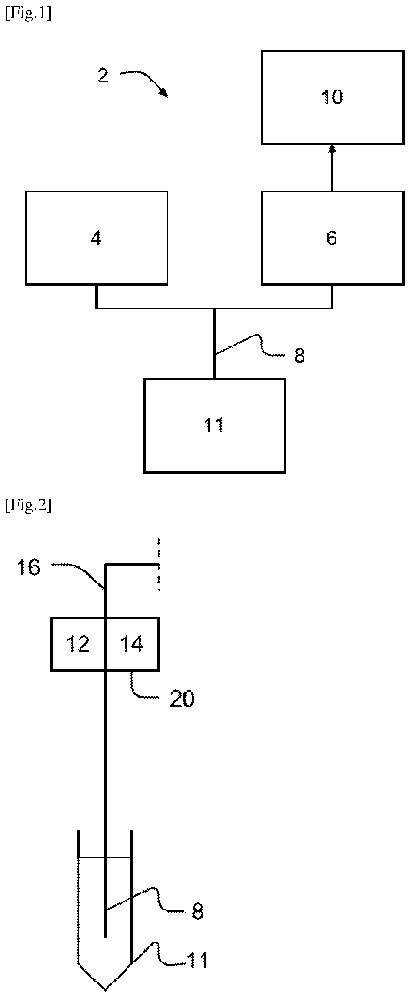

La figure 1 représente une vue schématique générale d'un dispositif 2 de numération de formule sanguine et de détermination de la mesure de vitesse de sédimentation selon l'invention. Le dispositif 2 comprend un premier groupe 4, un deuxième groupe 6, un organe de prélèvement 8 et un convertisseur 10.

Le premier groupe 4 est agencé pour prélever un échantillon sanguin dans un tube et pour réaliser principalement une numération de formule sanguine sur cet échantillon. Cette mesure peut être réalisée de manière classique et connue par ailleurs. De nombreux appareils d'hématologie sont spécialisés dans la réalisation de cette mesure. D'autres types d'analyses sanguines que des CBC peuvent être réalisées au sein du groupe 4, telles que des mesures d'hémoglobine glyquée (HbA1c), Protéine C-réactive (CRP), etc...

Le deuxième groupe 6 est agencé pour déterminer une mesure de VS. C'est ce deuxième groupe qui fait l'objet principal de l'invention. En effet, comme décrit en introduction, ce test, qu'il soit réalisé selon la méthode classique ou par mesure de changement de l'absorbance lumineuse, est soit fastidieux, soit couplé à une mesure CBC, qui ralentit l'ensemble du dispositif.

La mise en œuvre du deuxième groupe 6 selon l'invention permet d'extrapoler une mesure de vitesse de sédimentation par changement de l'absorbance lumineuse d'une manière découplée de toute mesure CBC ou autres mesures sanguines. Pour cela, le deuxième groupe 6 est agencé pour commander l'organe de prélèvement 8 qui est ici une aiguille indépendamment du premier groupe 4, c'est-à-dire que les échantillons prélevés par le premier groupe 4 ne sont utilisés que pour une mesure CBC ou autres mesures sanguines, et les échantillons prélevés par le deuxième groupe 6 ne sont utilisés que pour une mesure ESR.

Ainsi, comme on peut le voir sur la figure 1, le premier groupe 4 ou le deuxième groupe 6 commande l'aiguille 8 pour prélever un échantillon sanguin dans un tube de sang 11. Ensuite, cet échantillon est amené au premier groupe 4 pour réaliser une mesure CBC ou autres mesures sanguines, ou au deuxième groupe 6 pour réaliser une mesure de changement de l'absorbance lumineuse. Dans ce dernier cas, la mesure est transmise au convertisseur 10 qui retourne un signal ESR et/ou une valeur de mesure de VS.

La figure 2 représente un exemple de réalisation du deuxième groupe de mesure 6. Selon cet exemple, le deuxième groupe de mesure 6 est réalisé au moyen d'une source optique 12 et d'un capteur optique 14 qui sont assemblés en regard l'un de l'autre autour d'un tube 16 qui sert à transporter l'échantillon de sang prélevé par l'aiguille 8 depuis un tube de sang 11 vers l'intérieur du dispositif 2.

Dans l'exemple décrit ici, la source lumineuse 12 est de type LED à longueur d'onde infrarouge de manière préférée dans la plage 700-980 nm et en particulier 800 nm, qui est un point isobestique entre l'oxyhémoglobine et la désoxyhémoglobine ce qui rend la mesure insensible au niveau de la saturation du sang en oxygène. Dans l'exemple décrit ici, le capteur optique 14 est de type photodiode et peut être choisi parmi les capteurs PMT, PDA, CMOS, etc... Dans l'exemple décrit ici, le tube 16 est en téflon et est raccordé à l'aiguille 8. En variante, le tube 16 peut être en verre ou plastique et doit être choisi de manière à offrir une bonne transparence à la longueur d'onde de la source lumineuse 12.

L'ensemble source lumineuse 12 et capteur optique 14 peut être vu comme un unique capteur 20 du deuxième groupe 6. Comme dans l'exemple décrit ici, il peut être en deux parties qui s'assemblent pour enserrer l'aiguille 8 (par exemple métallique) et le tube 16. En variante, la source lumineuse 12 et le capteur optique 14 peuvent être réalisés d'un seul tenant. De manière préférée, le capteur 20 est disposé assez proche de l'extrémité de l'aiguille 8, à moins de 10cm de celle-ci, afin d'optimiser le cisaillement des globules rouges. De manière préférée, cette distance est d'environ 5cm pour obtenir les meilleurs résultats. Dans une variante le capteur 20 peut être placé directement en sortie de l'aiguille 8.

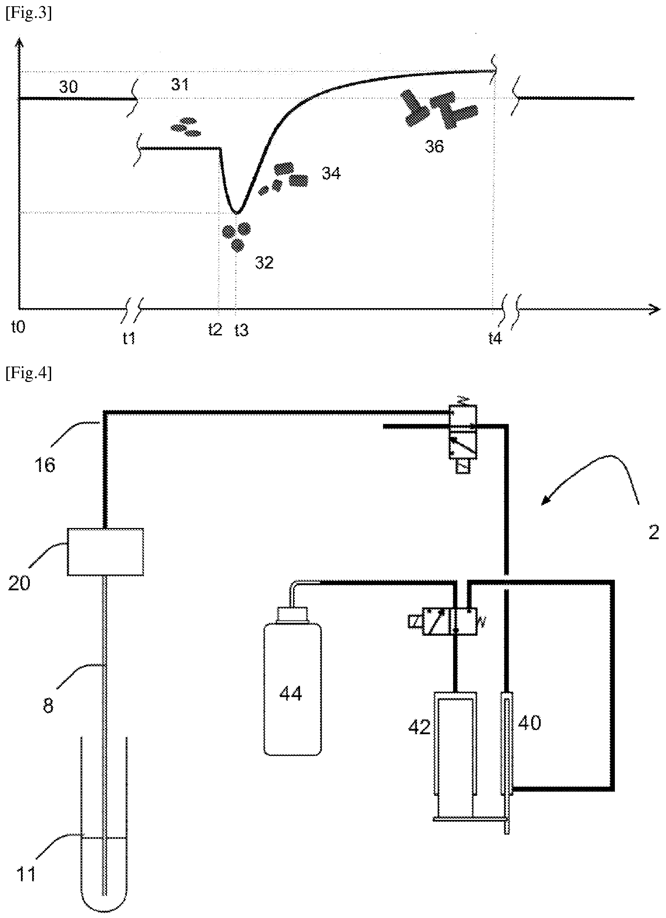

Quelle que soit la configuration, le deuxième groupe 6 permet d'utiliser de manière avantageuse le diamètre de l'aiguille 8 qui est classiquement de l'ordre de 1mm. En effet, lors d'un prélèvement par l'aiguille 8, les globules rouges subissent des déformations successives qui sont décrites ci-après et qui sont représentées sur la figure 3.

Ainsi, une fois l'aiguille 8 plongée dans le tube de sang 11, le deuxième groupe 6 commande une aspiration par l'aiguille 8 déjà amorcée en diluant afin de prélever du sang. Cela est réalisé grâce à des moyens de contrôle d'automatisme, de bacs de préparation et d'électrovannes et seringues connus par ailleurs et non représentés pour des raisons de simplification. Ces moyens entraînent le déplacement du diluant qui occupe le tube 16. A cette étape, du fait de la nature translucide du tube 16 et du diluant qu'il contient, le capteur 20 mesure un signal optique constant.

Ensuite, l'aliquote de sang est déplacée jusqu'au capteur 20 par aspiration. Les globules rouges subissent un cisaillement, ce qui casse l'agrégation. À cette étape, le signal optique reste maximal puisque le sang n'est pas encore en regard du capteur 20. Sur la figure 3, cela est représenté avec la référence 30.

Lorsque le sang arrive dans le capteur, le signal optique représente l'état cisaillé du sang. À ce stade de cisaillement du sang, les hématies ont une forme allongée, comme visible avec la référence 31.

Lorsque l'aspiration s'arrête afin de stopper le cisaillement, le signal de transmission optique baisse du fait que les globules rouges reprennent leur forme relaxée de disque biconcave. Sur la figure 3, cela est représenté avec la référence 32. Ensuite, le signal optique augmente suivant une progression pseudo logarithmique. L'augmentation progressive du signal optique mesurée par le capteur optique 14 est liée à l'agrégation progressive des globules rouges libres. L'agrégation se fait par l'empilement des globules rouges formant des rouleaux puis des structures en trois dimensions ce qui est représenté sur la figure 3 avec les références 34 et 36.

Au-delà d'environ 40s selon les sangs, l'agrégation est fortement ralentie et la sédimentation commence. Ce début de sédimentation interfère sur la mesure d'intérêt qui est l'agrégation et de sa corrélation avec la vitesse de sédimentation. Après t4 l'aliquote de sang est évacuée, par exemple par déplacement de l'aiguille 8 au-dessus d'un bac. On procède ainsi à l'évacuation du sang et au rinçage du tube 16 avec du diluant, le tube 16 se trouvant à la fin de cette étape entièrement rempli de diluant comme au début de la procédure décrite plus haut.

Quatre instants sont représentés sur la figure 3 :
- avant l'instant t1, le tube 16 est rempli de diluant,
- l'instant t1 marque l'instant auquel le sang arrive au niveau du capteur 20 par aspiration,
- l'instant t2 marque l'instant auquel l'aspiration cesse,
- l'instant t3 marque l'instant à partir duquel les globules rouges ont repris leur forme relaxée, et l'agrégation commence,
- l'instant t4 marque l'instant de fin de la procédure, avec l'évacuation du sang qui est à nouveau remplacé par du diluant, comme avant l'instant t1.

L'observation de la figure 3 montre que le signal optique est moins important après l'instant t4, alors que le tube 16 est rempli de diluant, que lorsque le tube 16 est rempli de sang, ce qui peut paraître paradoxal. Cela s'explique par le fait que dans l'exemple décrit ici le capteur optique 14 est conditionné de manière différente avant l'instant t1 et après l'instant t4 de la figure 3.

Ainsi, avant l'instant t1 et après l'instant t4, il est déterminé que la mesure correspond à une mesure de "blanc". Pour toute cette période, le capteur optique 14 est conditionné par le convertisseur 10 avec un gain de mesure minimal.

L'instant t3 correspond au point le plus bas de la période t1-t4, à partir duquel le signal optique devient croissant, ce qui marque, comme décrit plus haut, le début du phénomène que l'invention vise à mesurer. Pour cette raison, et comme la variation du signal optique reste faible entre l'instant t0 et l'instant t1, dans l'exemple décrit ici, le capteur optique 14 est conditionné avec un gain minimal jusqu' à l'instant t1, puis avec un gain maximal entre l'instant t1 et t4, puis à nouveau avec un gain minimal après l'instant t4 pour la mesure suivante.

Cela est d'autant plus avantageux que, dans le mode de réalisation décrit ici, le convertisseur 10 est agencé pour déterminer une mesure basée sur la densité optique du signal mesuré par le capteur optique 14. Pour rappel, la densité optique est définie par la formule *DO*(*t*) *= log*(*KI0*/*I*(*t*)) où I(t) est la mesure du capteur optique à l'instant t et K le rapport gain maxi/gain mini. Plus précisément, le convertisseur 10 est agencé pour retourner une mesure de vitesse de sédimentation basée sur le rapport DO(t3)/DO(t4). La Demanderesse a réalisé de nombreuses mesures de vitesse de sédimentation en utilisant la méthode de référence Westergren qui permettent au convertisseur 10 d'associer les mesures ainsi calculées à une valeur de VS.

La Demanderesse a découvert qu'il est particulièrement avantageux d'utiliser la densité optique, qui permet de ne pas dépendre d'éventuelles variations dans la mesure de transmittance. La Demanderesse a également découvert que le convertisseur 10 peut aussi fonctionner à partir du rapport I(t₄)/I(t₃), sans passer par la densité optique au sens de Beer-Lambert et en utilisant I0 différemment dans le calcul.

Le convertisseur 10 peut être réalisé de diverses manières, par exemple sous la forme d'un code informatique approprié exécuté sur un ou plusieurs processeurs. Par processeurs, il doit être compris tout processeur adapté aux calculs décrits plus bas. Un tel processeur peut être réalisé de toute manière connue, sous la forme d'un microprocesseur pour ordinateur personnel, portable, tablette ou smartphone, d'une puce dédiée de type FPGA ou SoC, d'une ressource de calcul sur une grille ou dans le cloud, d'une grappe de processeurs graphiques (GPUs), d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée. Dans le cas de l'unité d'apprentissage automatique basé sur renforcement du gradient, des processeurs dédiés à l'apprentissage automatique pourront aussi être envisagés. En variante, le convertisseur 10 peut être un calculateur analogique sans programmation ou code informatique à proprement parler.

Toujours en variante, le convertisseur 10 pourrait utiliser un algorithme d'apprentissage automatique ("machine learning" en anglais), impliquant ou non un réseau de neurones (profond ou pas). Il s'agit d'associer les mesures d'intensité du capteur optique 14 avec une valeur de vitesse de sédimentation. Cette variante peut être particulièrement utile pour se passer de la densité optique. Toujours en variante, le gain du capteur optique 14 pourrait être le même pour tous les instants de la mesure.

La figure 4 représente une vue schématique d'un mode de réalisation du dispositif de la figure 1. Comme on peut le voir sur cette figure, le dispositif 2 est un appareil d'hématologie classique comprenant une seringue 40 de diamètre 1,5mm, et une seringue 42 de diamètre 16mm qui sont toutes deux reliées à l'aiguille 8. Le capteur 20 a été intégré sur l'aiguille 8, de sorte qu'il recouvre l'extrémité du tube 16 reliée à l'aiguille 8.

Le dispositif 2 de la figure 4 est adapté à réaliser une mesure CBC, une mesure ESR ou les deux.

Pour la mesure CBC, l'ensemble du circuit est amorcé en diluant, puis l'aiguille 8 percute le tube de sang 11 et prélève 10 µl avec la seringue 40. L'aiguille 8 est ensuite remontée et placée au-dessus du bac de préparation, puis l'extérieur de celle-ci est rincé dans ce bac, avec évacuation aux déchets. Enfin un mélange de l'échantillon de 10 µL avec 1 mL de diluant (par exemple) est distribué immédiatement après prélèvement dans le bac de préparation avec la seringue 42. Cette première dilution sera ensuite utilisée dans les différentes préparations pour réaliser la mesure CBC.

Pour la mesure ESR, il est procédé comme décrit plus haut en référence aux figures 1 à 3. L'ensemble du circuit est amorcé en diluant tiré d'un réservoir 44, puis une bulle d'air de quelques µL est créée en bout de l'aiguille 8. L'aiguille 8 est descendue dans le tube de sang 11 et une aliquote de 50 µL à 100 µL est prélevée par la seringue 42. L'aiguille 8 est remontée, et l'aliquote transférée au capteur 20 et la mesure optique de l'agrégation est réalisée. Enfin, le rinçage intérieur et extérieur de l'aiguille 8 dans un bac est réalisé, avec évacuation aux déchets. La mesure de blanc (I0) peut être effectuée avant le prélèvement ou en fin de rinçage. La comparaison optionnelle des mesures de blanc avant et après permettent une gestion d'exception, par exemple un contrôle du rinçage.

Les cycles CBC et ESR sont réalisés indépendamment l'un de l'autre, et font en particulier l'objet d'un prélèvement par l'aiguille 8 séparé : l'aliquote pour la mesure CBC ne peut pas être utilisée pour la mesure ESR et inversement.

Un mélange de l'échantillon de 10 µL avec 1 mL de diluant (par exemple) est distribué immédiatement après prélèvement dans le bac de préparation avec la seringue 42. Cette première dilution sera ensuite utilisée dans les différentes préparations pour réaliser la mesure CBC.

Cela permet de découpler les deux mesures sans prélèvement problématique de sang lorsque les deux mesures sont demandées. Cette indépendance rend la mesure ESR beaucoup moins gênante pour la cadence du dispositif 2 et permet une intégration à moindre coût, tant matériel qu'humain.

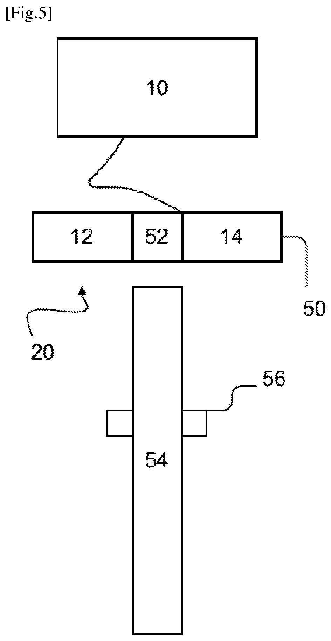

La figure 5 représente un autre mode de réalisation, adapté pour la mise en œuvre d'un appareil portable de détermination de la VS.

Dans ce mode de réalisation, l'organe de prélèvement 8 est mis en œuvre au moyen d'un capillaire 54 à usage unique. Cela permet de ne prélever qu'une goutte de sang sur le doigt d'un patient et évite un prélèvement de sang par ponction veineuse.

Le dispositif 2 comprend ainsi le convertisseur 10 et un boîtier 50 qui loge le capteur 20. Ainsi, le boîtier 50 renferme la source optique 12 et le capteur optique 14 qui sont reçus en regard l'un de l'autre autour d'un alésage 52 du boîtier 50.

Comme précédemment, la source lumineuse 12 est de type LED à longueur d'onde infrarouge de manière préférée dans la plage700-980 nm et en particulier 800 nm, et le capteur optique 14 est de type photodiode et peut être choisi parmi les capteurs PMT, PDA, CMOS, etc...

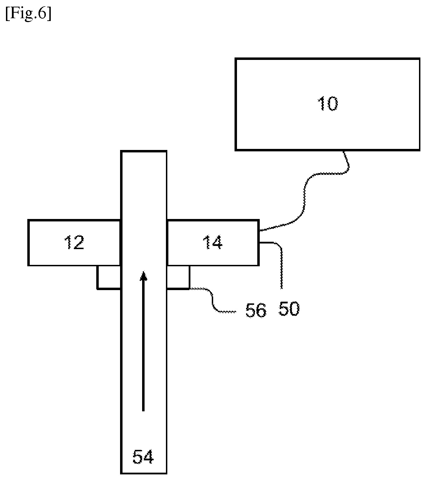

Comme on peut le voir sur la figure 6, lorsqu'un capillaire 54 est introduit dans l'alésage 52, le sang contenu dans ce capillaire peut remonter par capillarité jusqu'au boîtier 50.

Dans l'exemple décrit ici, le capillaire 54 est en téflon et présente un diamètre de 0,8 mm. En variante, le capillaire 54 peut être en verre ou plastique et doit être choisi de manière à offrir une bonne transparence à la longueur d'onde de la source lumineuse 12. Toujours en variante, le diamètre du capillaire 54 peut être compris entre 0,5mm (une valeur inférieure empêche la formation des grandes structures d'agrégat et réduit trop la fenêtre optique de mesure) et 1,5 mm (une valeur supérieure rend la force capillaire insuffisante).

Dans l'exemple décrit ici, le capillaire présente un ergot 56 qui vient en butée contre le boîtier 50 afin de contrôler l'entrée du tube 14 dans l'alésage 52. La distance de l'ergot 56 à l'extrémité du capillaire 54 est dans l'exemple décrit ici fixée à 15 mm. Les limites sont définies par les contraintes suivantes : trop près et le capteur 20 gêne pour le prélèvement du sang sur le doigt, et trop loin et il faut une force capillaire trop importante. En variante, le tube 54 pourrait présenter un marquage ou un autre moyen permettant de contrôler le placement du tube 54 dans l'alésage 52. Toujours en variante, rien n'est prévu.

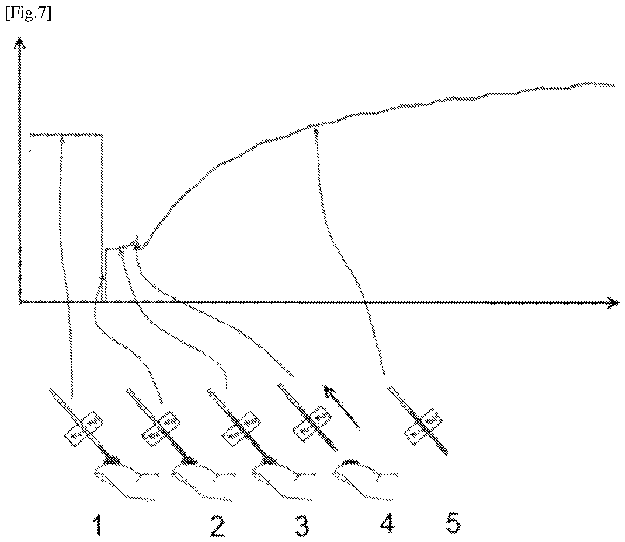

Dans ce mode de réalisation, la forme du signal est légèrement différente puisque l'aspiration est faite par capillarité. Aussi, la figure 7, équivalente à la figure 3, représente l'évolution de la mesure du signal en sortie du capteur optique 14.

Comme on peut le voir sur cette figure, il n'y a pas les portions avant l'instant t1 et après l'instant t4, puisque les capillaires sont à usage unique. Ainsi :
- la référence 1 correspond à la période avant l'instant t1 de la figure 3. La mesure est réalisée à travers le capillaire 54 vide, et constituera le I0 du calcul en gain faible. La transmission sur capillaire 54 vide est 30 fois plus grande que le sang. Dans ces conditions, il est préféré de garder les modes gain fort/gain faible.
- la référence 2 correspond aux instants t2 à t3 de la figure 3. Le sang arrive au capteur, et la transmission chute instantanément à 0. C'est ce front qui est détecté et peut être utilisé pour commander la bascule du gain faible vers le gain fort.
- la référence 3 correspond aux instants après l'instant t3 de la figure 3. Le sang circule dans le capillaire. Il est en état cisaillé. La légère pente est due au ralentissement du sang et donc du cisaillement.
- la référence 4 correspond à la fin du prélèvement. Le sang ayant dépassé le capteur, l'utilisateur retire le système. La séparation entre le capillaire et la goutte de sang stoppe « brutalement » la remontée capillaire. Ce qui se traduit par un pic, puis une baisse (pointé par la référence 4), et
- la référence 5 correspond à la phase d'agrégation.

Le convertisseur 10 peut être reliée à tout type d'interface, par exemple ordinateur portable, notebook, etc... L'interface peut être également être du type smartphone avec une application dédiée. Dans ce cas le capteur 20 embarque les composants optiques et les ressources électroniques permettant l'interfaçage avec un moyen de communication standard, USB par exemple. L'interface peut également être un système propriétaire. Cette solution permet une interface homme-machine parfaitement adaptée au besoin, ainsi que la réduction au strict nécessaire des composants embarqués dans le capteur (LED et photodiode). De manière préférée, un écran tactile est utilisé, ce qui permet notamment de disposer d'un clavier virtuel pour la saisie des identifiants et autres informations relatives à l'analyse effectuée.

## Revendications

1. Dispositif de détermination de vitesse de sédimentation, comprenant au moins un organe de prélèvement (8) d'un échantillon sanguin, et un capteur (20) comprenant une source de lumière à infrarouge (12) et un capteur optique (14) disposés sensiblement en regard l'un de l'autre autour d'une portion sensiblement transparente (16) de l'organe de prélèvement (8) de sorte que la lumière émise par la source de lumière infrarouge (12) atteint le capteur optique (14) après avoir traversé ladite portion sensiblement transparente (16), le capteur optique (14) étant agencé pour réaliser une mesure de blanc, le dispositif comprenant en outre un convertisseur (10) agencé pour recevoir une ou plusieurs mesures de transmission lumineuse du capteur optique (14), pour calculer le rapport entre la mesure de blanc et la ou les plusieurs mesures de transmission lumineuse et pour retourner une vitesse de sédimentation.

2. Dispositif selon la revendication 1, dans lequel le convertisseur (10) est agencé pour déterminer un instant de mesure de transmission lumineuse la plus basse (t3), et un instant de mesure de transmission lumineuse final (t4).

3. Dispositif selon la revendication 2, dans lequel le capteur optique (14) est agencé pour mettre en œuvre un gain maximal entre l'instant de mesure de transmission lumineuse la plus basse (t3) et l'instant de mesure de transmission lumineuse final (t4), et pour mettre en œuvre un gain minimal le reste du temps.

4. Dispositif selon la revendication 2 ou 3, dans lequel le convertisseur (10) est agencé pour calculer la vitesse de sédimentation à partir du ratio entre d'une part le rapport entre la mesure de blanc et la mesure à l'instant de mesure de transmission final (t4), et d'autre part le rapport entre la mesure de blanc et la mesure à l'instant de mesure de transmission lumineuse de transmission lumineuse la plus basse (t3).

5. Dispositif selon l'une des revendications précédentes, dans lequel le capteur optique (14) est commandé avec un gain faible avant que du sang passe dans la portion sensiblement transparente, et avec un gain fort après.

6. Dispositif selon l'une des revendications précédentes, dans lequel l'organe de prélèvement est une aiguille (8) pouvant être commandée pour le prélèvement d'un échantillon sanguin à laquelle est relié un tube (16) dans lequel est réalisée la portion sensiblement transparente (16).

7. Dispositif selon la revendication 6, agencé pour réaliser un rinçage de l'aiguille (8) et du tube (16) entre deux déterminations de mesures de vitesse de sédimentation.

8. Dispositif selon l'une des revendications 1 à 5, dans lequel l'organe de prélèvement (8) est un capillaire (54), et dans lequel le capteur (20) présente un alésage (52) agencé pour recevoir ledit capillaire (54).

9. Dispositif selon la revendication 8, dans lequel le capillaire (54) présente un ergot (56) agencé pour venir en butée contre le capteur (20).

10. Procédé de détermination de vitesse de sédimentation comprenant les opérations suivantes :
a) prélever un échantillon sanguin,
b) faire passer l'échantillon sanguin dans une portion sensiblement transparente disposée entre une source de lumière à infrarouge et un capteur optique,
c) mesurer une ou plusieurs transmissions lumineuses lors de l'opération b)
d) réaliser une mesure de blanc en l'absence d'échantillon sanguin, et
e) calculer le rapport entre la mesure de blanc et la ou les plusieurs mesures de transmission lumineuse et en tirer une vitesse de sédimentation.

## Patentansprüche

1. Vorrichtung zur Bestimmung der Sedimentationsgeschwindigkeit, umfassend mindestens ein Element zur Entnahme (8) einer Blutprobe und einen Sensor (20) mit einer Infrarotlichtquelle (12) sowie einen optischen Sensor (14), die im Wesentlichen einander gegenüberliegend um einen im Wesentlichen transparenten Abschnitt (16) des Entnahmeelements (8) angeordnet sind, sodass das von der Infrarotlichtquelle (12) emittierte Licht den optischen Sensor (14) erreicht, nachdem es den im Wesentlichen transparenten Abschnitt (16) durchlaufen hat, wobei der optische Sensor (14) dazu ausgebildet ist, eine Blindwertmessung durchzuführen, wobei die Vorrichtung ferner einen Wandler (10) umfasst, der dazu ausgebildet ist, eine oder mehrere Lichttransmissionsmessungen von dem optischen Sensor (14) zu empfangen, um das Verhältnis zwischen der Blindwertmessung und der einen oder den mehreren Lichttransmissionsmessungen zu berechnen und um eine Sedimentationsgeschwindigkeit zurückzusenden.

2. Vorrichtung nach Anspruch 1, wobei der Wandler (10) dazu ausgebildet ist, einen Zeitpunkt der niedrigsten Lichttransmissionsmessung (t3) und einen Zeitpunkt der letzten Lichttransmissionsmessung (t4) zu bestimmen.

3. Vorrichtung nach Anspruch 2, wobei der optische Sensor (14) dazu ausgebildet ist, zwischen dem Zeitpunkt der niedrigsten Lichttransmissionsmessung (t3) und dem Zeitpunkt der letzten Lichttransmissionsmessung (t4) eine maximale Verstärkung und während der restlichen Zeit eine minimale Verstärkung bereitzustellen.

4. Vorrichtung nach Anspruch 2 oder 3, wobei der Wandler (10) dazu ausgebildet ist, die Sedimentationsgeschwindigkeit aus dem Verhältnis zwischen einerseits dem Verhältnis zwischen der Blindwertmessung und der Messung zum Zeitpunkt der letzten Lichttransmissionsmessung (t4) und andererseits dem Verhältnis zwischen der Blindwertmessung und der Messung zum Zeitpunkt der niedrigsten Lichttransmissionsmessung (t3) zu berechnen.

5. Vorrichtung nach einem der vorstehenden Ansprüche, wobei der optische Sensor (14) mit einer niedrigen Verstärkung gesteuert wird, bevor Blut durch den im Wesentlichen transparenten Abschnitt fließt, und danach mit einer starken Verstärkung gesteuert wird.

6. Vorrichtung nach einem der vorstehenden Ansprüche, wobei das Entnahmegerät eine zur Entnahme einer Blutprobe steuerbare Nadel (8) ist, mit der ein Rohr (16) verbunden ist, in dem der im Wesentlichen transparente Abschnitt (16) ausgebildet ist.

7. Vorrichtung nach Anspruch 6, die dazu ausgebildet ist, zwischen zwei Bestimmungen der Sedimentationsgeschwindigkeit eine Spülung der Nadel (8) und des Rohrs (16) durchzuführen.

8. Vorrichtung nach einem der Ansprüche 1 bis 5, wobei das Entnahmeelement (8) eine Kapillare (54) ist und wobei der Sensor (20) eine Bohrung (52) aufweist, die zur Aufnahme der Kapillare (54) ausgebildet ist.

9. Vorrichtung nach Anspruch 8, wobei die Kapillare (54) einen Vorsprung (56) aufweist, der dazu ausgebildet ist, am Sensor (20) anzuliegen.

10. Verfahren zur Bestimmung der Sedimentationsgeschwindigkeit, welches die folgenden Schritte umfasst:
a) Entnehmen einer Blutprobe,
b) Leiten der Blutprobe durch einen im Wesentlichen transparenten Abschnitt, der zwischen einer Infrarotlichtquelle und einem optischen Sensor angeordnet ist,
c) Messen einer oder mehrerer Lichttransmissionen während des Vorgangs b),
d) Durchführen einer Blindwertmessung ohne Blutprobe, und
e) Berechnen des Verhältnisses zwischen der Blindwertmessung und der einen oder den mehreren Lichttransmissionsmessungen und daraus Ableiten einer Sedimentationsgeschwindigkeit.

## Claims

1. A device for determining a sedimentation rate, comprising at least one member (8) for sampling a blood sample, and a sensor (20) comprising an infrared light source (12) and an optical sensor (14) arranged substantially opposite each other around a substantially transparent portion (16) of the sampling member (8) so that the light emitted by the infrared light source (12) reaches the optical sensor (14) after passing through said substantially transparent portion (16), the optical sensor (14) being arranged to carry out a blank measurement, the device further comprising a converter (10) arranged so as to receive one or more light transmission measurement(s) from the optical sensor (14), to calculate the ratio between the blank measurement and the one or more light transmission measurement(s) and to return a sedimentation rate.

2. The device according to claim 1, wherein the converter (10) is arranged so as to determine a time point of measurement of the lowest light transmission (t3), and a time point of measurement of the final light transmission (t4).

3. The device according to claim 2, wherein the optical sensor (14) is arranged so as to implement a maximum gain between the time point of measurement of the lowest light transmission (t3) and the time point of measurement of the final light transmission (t4), and to implement a minimum gain the rest of the time.

4. The device according to claim 2 or 3, wherein the converter (10) is arranged so as to calculate the sedimentation rate from the ratio between, on the one hand, the ratio between the blank measurement and the measurement at the time point of measurement of final transmission (t4) and, on the other hand, the ratio between the blank measurement and the measurement at the time point of measurement of the lowest light transmission (t3).

5. The device according to one of the preceding claims, wherein the optical sensor (14) is controlled with a low gain before blood passes through the substantially transparent portion, and with a high gain afterwards.

6. The device according to one of the preceding claims, wherein the sampling member is a needle (8) which can be controlled for sampling of a blood sample to which a tube (16) is connected in which the substantially transparent portion (16) is formed.

7. The device according to claim 6, arranged so as to carry out a rinsing of the needle (8) and of the tube (16) between two determinations of sedimentation rate measurements.

8. The device according to one of claims 1 to 5, wherein the sampling member (8) is a capillary (54), and wherein the sensor (20) has a bore (52) arranged so as to receive said capillary (54).

9. The device according to claim 8, wherein the capillary (54) has a lug (56) arranged so as to abut against the sensor (20).

10. A method for determining a sedimentation rate comprising the following operations of:
a) sampling a blood sample,
b) making the blood sample pass into a substantially transparent portion arranged between an infrared light source and an optical sensor,
c) measuring one or more light transmission(s) during the operation b)
d) carrying out a blank measurement in the absence of a blood sample, and
e) calculating the ratio between the blank measurement and the one or more light transmission measurement(s) and deducing a sedimentation rate therefrom.
